# EUROPEAN PATENT APPLICATION

(11) **EP 3 106 488 A1**
(43) Date of publication of application: **21.12.2016**
(21) Application number: 15189029.0
(22) Date of filing: 08.10.2015
(51) Int. Cl.: C08G 75/00, C07C 319/00, C07C 321/00, C08G 65/00, C08G 75/14, C08L 81/00, C08L 81/04

(54) **PHOTOBASE-CATALYSED OXIDATIVE POLYMERISATION OF POLY (DISULPHIDE)S**

(30) Priority: 19.06.2015 EP 15305958
(71) Applicant: Université de Haute Alsace, 68093 Mulhouse Cedex (FR)
(72) Inventor: ALLONAS, Xavier, 68100 MULHOUSE (FR); LEY, Christian, 68200 MULHOUSE (FR); FEILLÉE, Noémi, 68100 MULHOUSE (FR); CHEMTOB, Abraham, 68100 MULHOUSE (FR); CROUTXÉ-BARGHORN, Céline, 68150 RANTZWILLER (FR)
(74) Representative: Novagraaf Technologies

(57) **Abstract**

The present invention relates to a composition comprising: a photobase generator and a monomer comprising at least two thiol functional groups and/or at least one oligomer having at least two thiol functional groups.

The invention also relates to a method of synthesising poly(disulphide)s by photo-oxidation comprising the steps of preparing a composition comprising a photobase generator and monomers comprising at least two thiol functional groups and/or oligomers having at least two thiol functional groups, and exposing said photobase generator to a UV-visible light irradiation in the presence of oxygen.

## Description

### PRIORITY

The present Patent Application claims priority to provisional European Patent Application N° 15305958.9 filed on 19 June 2015, the entire contents of which are incorporated herein by reference.

### DESCRIPTION

### TECHNICAL FIELD

The present invention relates to a photobase-catalysed oxidative polymerisation of polyfunctional thiol monomer(s) or oligomer(s), and elastomeric poly(disulphide) films obtained thereof.

The present invention also relates to a composition comprising a photobase generator (PBG) and polyfunctional thiol monomer(s) or oligomer(s).

The present invention further relates to an article obtainable by a method of the invention, and the uses of said elastomeric poly(disulphide) film.

### STATE OF THE ART

Sulphur-containing polymers represent an original and versatile class of high-performance polymers. Three types of sulphur-based polymers are produced commercially: poly(phenylene sulphide) (PPS), polysulphones (PSF) and poly(disulphide)s.

Poly(phenylene sulphide) are semi-crystalline thermoplastics polymers and polysulphones are amorphous polymers. These two classes of polymers have outstanding properties of breaking resistance, hardness and heat resistance.

Poly(disulphide)s are polymers based on the dynamic S-S repeated units in the main chain, which can be formed and cleaved reversibly. In biology, this unique characteristic accounts for the ability of proteins to fold into their active conformation through thiol-disulphide exchange (E. Bang, M. Lista, G. Sforazzini, N. Sakai, S. Matile, Chem. Sci., 2012, 3, 1752- 1763 **[1]**). But in fact, reversibility can be also activated by many other stimuli including redox pulses, heat or light, making this polymer unique and a very good candidate for adaptability and/or degradability. While many studies address disulphides as monomeric compounds, there are few studies on the synthesis of poly(disulphide)s notably by air oxidation (E. Rosenthal, J.E. Puskas, C. Wesdemiotis, Biomacromolecules, 2012, 12, 154-164 **[2]**).

Poly(disulphide) networks have exceptional resistance to solvent even when their structure is linear. A second advantage is the preservation of elastomeric behaviour at low temperatures, making these materials highly valuable for specialised and technical applications such as insulation joints for glasses, aircraft gas tanks, and civil engineering applications.

Once considered as a weakness, dynamic polymers consisting of repeated reversible covalent bonds, such as C=N bonds in imines or C-O bonds in alkoxylamines, are now praised for their adaptability and compositional diversity (J.-M. Lehn, Progress in Polymer Science, 2005, 30, 814-831 **[3]** and T. Maeda, H. Otsuka and A. Takahara, Progress in Polymer Science, 2009, 34, 581-604 **[4]**). Chemists progressively realised that polymers able to reorganise structure and constitution on demand provides an avenue for smart stimulus-responsive materials, with the promise of advanced applications in recycling, (S. Billiet, K. De Bruycker, F. Driessen, H. Goossens, V. Van Speybroeck, J. M. Winne and F. E. Du Prez, Nat Chem, 2014, 6, 815-821 **[5]** and B. D. Fairbanks, S. P. Singh, C. N. Bowman and K. S. Anseth, Macromolecules, 2011, 44, 2444-2450 **[6]**), self-repair, (M. Burnworth, L. Tang, J. R. Kumpfer, A. J. Duncan, F. L. Beyer, G. L. Fiore, S. J. Rowan and C. Weder, Nature, 2011, 472, 334-337 **[7]** and J. Canadell, H. Goossens and B. Klumperman, Macromolecules, 2011, 44, 2536-2541 **[8]**) or stress relaxation (T. F. Scott, A. D. Schneider, W. D. Cook and C. N. Bowman, Science, 2005, 308, 1615-1617 **[9]**).

One of the most intriguing and versatile example of dynamic covalent bonds is the disulphide bond, which controls processes as important as protein folding and rubber vulcanisation. The S-S bond reversibility expresses through a number of pathways - thiol-disulphide exchange, reduction to thiol or metathesis - and using an extensive range of stimuli, *e.g.* redox species, thiol nucleophiles, UV light (H. Otsuka, S. Nagano, Y. Kobashi, T. Maeda and A. Takahara, Chemical Communications, 2010, 46, 1150-1152 **[10]**) or mechanical force. In particular, the reversible disulphide/thiol Red/Ox couple is ubiquitous in living organisms. Remarkably, the dynamic features of poly(disulphide)s do not prevent an excellent record of "static" properties such as low vapour permeation, high resistance to solvents and environmental degradation. Accordingly, the major developments of these sulphur-containing polymers have focused on high-performance industrial sealants, but also gene delivery (S. Bauhuber, C. Hozsa, M. Breunig and A. Göpferich, Advanced Materials, 2009, 21, 3286-3306 **[11]**) through reductive depolymerisation. Nevertheless, this unique combination of properties has not garnered so much attention, particularly considering that the first products were released in the late 1920s.

Poly(disulphide)s can be produced by thermal crosslinking from liquid polysulphide oligomer precursors containing internal disulphide groups in their structure, i.e. already preformed, and at least two terminal thiol functions (f > 2), an example of oligomer precursor is described in Formula 1. Examples of poly(disulphide) liquid precursors are commercially available under the trade name Thiokol® or Thioplast®.

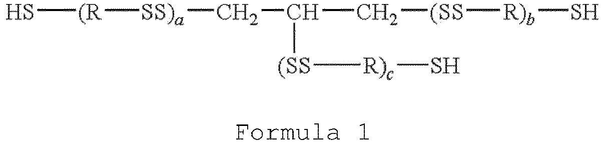

Thermal crosslinking of poly(disulphide)s can be obtained by oxidation of R-SH functional groups. This method implements a mild oxidant, preferably barium oxide, manganese oxide, or organic peroxide and a basic catalyst, preferably a tertiary amine to ensure the conversion of two terminal functional groups R-SH to R-S-S-R.

Poly(disulphide)s can also be obtained by cross-linking of preformed SH-terminal poly(disulphide) oligomers by a nucleophilic polyaddition of thiol-epoxy or thiol-isocyanate. This method involves the nucleophilic addition of the thiol -SH functional group on an epoxy or an isocyanate groups to promote the formation of a network according to a stepwise curing process.

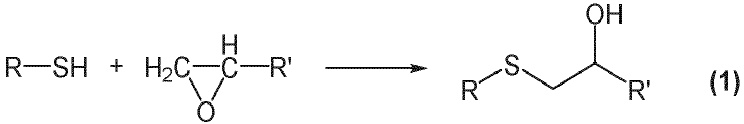

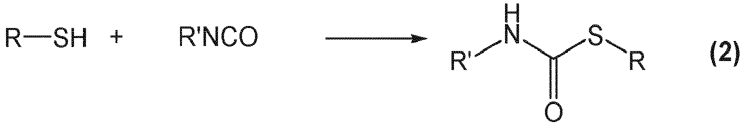

However, current poly(disulphide) synthetic methods have several disadvantages. Namely, poly(disulphide)s are prepared from liquid pre-polymer crosslinking. These pre-polymers are functionalised with thiol groups and include preformed disulphide functions and thus require a prior synthesis. This prior synthesis is a multi-step synthesis which comprises the steps of polymerisation and reduction of the molar mass by reduction of S-S. In addition, the synthesis of these pre-polymers requires the use of hazardous materials such as HCl, halogenated derivatives including bis-chloroethyl formal or 1,2,3-trichloropropane and generates a lot of waste. The synthesis of the prepolymers is therefore complex and requires the implementation of specific equipment.

As poly(disulphide)s are obtained by an oxidative synthesis or by a nucleophilic synthesis, it is necessary to separate the two reactive components, for example the oxidising agent and the prepolymer, requiring a two-components formulation. In addition, synthesis of the poly(disulphide)s starts upon the mixing of the starting materials, thus gelling time must be considered for the target application.

Furthermore, poly(disulphide)s obtained by oxidation require the addition of at least 5-15 % of an oxidant which influences the mechanical properties and/or chemical resistance and transparency of the final material. Common oxidants are generally inorganic derivatives, especially PbO₂, MnO₂, iron complexes, or organic derivatives, particularly peroxides or dioximes. Sodium perborate is a particularly advantageous oxidant as it improves the transparency properties of poly(disulphide)s.

Polymerisation requires a minimum of 2-3 hours which is relatively slow. In addition, the polymerisation is generally followed by an increase in the shearing of the composition. To adjust the viscosity, these formulations are solvent-based.

These various drawbacks are inherent to the crosslinking methods, and restrict the use of poly(disulphide)s to some specific applications, such as the preparation of structural materials *e.g.* gaskets or sealants.

Photopolymerisation is a polymerisation method which involves exposing liquid film-based oligomers and multifunctional monomers (acrylate, epoxy, etc.) to a UV-visible radiation, leading to a high crosslink density to create a hard and chemically resistant solid film.

The efficiency of UV radiation in photopolymerisation processes is due to the unique combination of a solvent-free composition, ambient temperature reaction, cycle times of less than a second, small size production lines, lowering the ground surface and the low cost of the equipment.

Generally applied in industrial coatings, graphic arts and adhesives, the market for photocrosslinked organic films grows by 9% per year, an astonishing rate if compared to other solventless technologies such as aqueous phase (3%) or powder (2%).

A limitation to photopolymerisation is that it is almost exclusively applied to chain polymerisation methods, such as radical polymerisation and cationic polymerisation. Consequently, the choice of monomers is often limited to acrylic and methacrylic esters, styrene for radical polymerisation processes, and epoxy and vinyl ether for cationic polymerisation processes.

Polysulphides prepared by radical photopolymerisation are generally prepared from commercially available linear or branched polysulphide oligomer derivatives H(SCH₂CH₂OCH₂OCH₂CH₂S)ₙH having terminal thiol groups.

Caddy et al. (Eur. Polym. J., 39, 2003, 461-487 **[12])** described the synthesis of polysulphides starting from modified oligomers in which the thiol ends were modified to render these terminal ends suitable for radical polymerisations (acryloyl) or chromophores (benzoyl).

Also known from WO 2013/090988 and US 2012/0040104 is the steps radical thiol-ene photopolymerisation involving Thiokol® oligomer and a divinyl ether monomer in the presence of a free radical photoinitiator.

Teodorescu et al. (Reactive Funct. Polym. 70, 2010, 419-425 **[13]**) describe the incorporation of poly(disulphide) oligomers by transfer reaction (SH or SS) during the radical polymerisation of vinyl acetate.

Hirata et al. (J. Polym. Sci. A Polym. Chem., 4, 2010, 4385-4392 **[14]**) describe the chemical modification of poly (monosulphide) by radical photopolymerisable groups for photolithographic applications. The crosslinking reaction of an end-functionalized star-shaped poly(phenoxy propylene sul-fide) proceeded by the UV irradiation in the presence of poly(ethylene glycol) diacrylate and a radical photoinitiating system. A negative photoresist pattern was thus prepared. The presence of sulphur atoms within the polymer backbone is expected to impart high adhesion strength toward metals, which is highly desired for semiconductor devices.

However, these polysulphide synthetic methods by radical photopolymerisation, have several drawbacks, including the need to prepare specific oligomers.

Three main synthetic routes to disulphide polymers are reported in the literature (K. Kishore and K. Ganesh, in Polymer Synthesis/Polymer Engineering, Springer Berlin Heidelberg, 1995, vol. 121, pp. 81-121 **[15]** and. D. Vietti and M. Scherrer, in Kirk-Othmer Encyclopedia of Chemical Technology, John Wiley & Sons, Inc., 2000 **[16]**).

The first is the heat-induced ring-opening polymerisation of cyclic (arylene disulphide) oligomers (K. Kishore *et al* **[15]**).

The second brings together several polycondensations involving difunctional monomers with internal disulphide group (D. J. Phillips and M. I. Gibson, Biomacromolecules, 2012, 13, 3200-3208 **[17]**).

The third is the most simple conceptually as it relies on the base-catalysed oxidation of multifunctional (≥ 2) thiol derivatives in presence of an oxidising agent. In contrast to the first two methods, the disulphide bonds are generated *in situ,* and a broader range of affordable precursors is accessible (E. Q. Rosenthal-Kim and J. E. Puskas, Pure Appl. Chem., 2013, 84, 2121-2133 **[18]**; Y. Lee, H. Koo, G.-w. Jin, H. Mo, M. Y. Cho, J.-Y. Park, J. S. Choi and J. S. Park, Biomacromolecules, 2005, 6, 24-26 **[19]** and J. Kamada, K. Koynov, C. Corten, A. Juhari, J. A. Yoon, M. W. Urban, A. C. Balazs and K. Matyjaszewski, Macromolecules, 2010, 43, 4133-4139 **[20]**).

Industrially, the oxidative coupling of thiol-terminated oligomers is the reference process to cross-link poly(disulphide) rubbers, referred to as Thiokol® or Thioplast®, (G. B. Lowe, International Journal of Adhesion and Adhesives, 1997, 17, 345-348 **[21]).** However, as previously mentioned this methodology is plagued with several problems, including slow curing, 2-component formulations, toxic (metal) or harmful (organic peroxides) oxidative reagents. The linear solution polymerisation of dithiol monomer is even more challenging with insolubility issues, formation of low-molecular-weight products and very long reaction times of more than ten hours (W. Choi, F. Sanda, N. Kihara and T. Endo, Journal of Polymer Science Part A: Polymer Chemistry, 1998, 36, 79-84 **[22]**). Recently, Puskas et al. introduced a more sustainable and effective approach performed in water, thus demonstrating that there is scope for improved processing methods to poly(disulphide). Using triethylamine catalyst and a pair of oxidants (air and hydrogen peroxide), the oxidative polymerisation of ethylene glycol dithiol resulted in a precipitate with ***M̅ₙ*** > 2.5×10⁵ g/mol (Rosenthal *et al.* **[2]**).

There is thus a need for a convenient, eco-efficient and industrially scalable poly(disulphide)s processing method, which is applicable to a large range of monomers and which overcomes the drawbacks of the prior art.

### DISCLOSURE OF THE INVENTION

The present invention resolves the needs and shortcomings of the prior art and provides a photobase catalysed oxidative polymerisation of poly(disulphide)s ("poly(disulfure)s" in French), for a broad class of thiol-terminated monomers, which do not require the presence of internal S-S bond in their structure.

The inventors have discovered, surprisingly, and after extensive research, photobase generators allowing the implementation of an oxidative photopolymerisation of thiols. To the knowledge of the inventors, the mild and chemoselective oxidative photopolymerisation in air of polythiol is unprecedented.

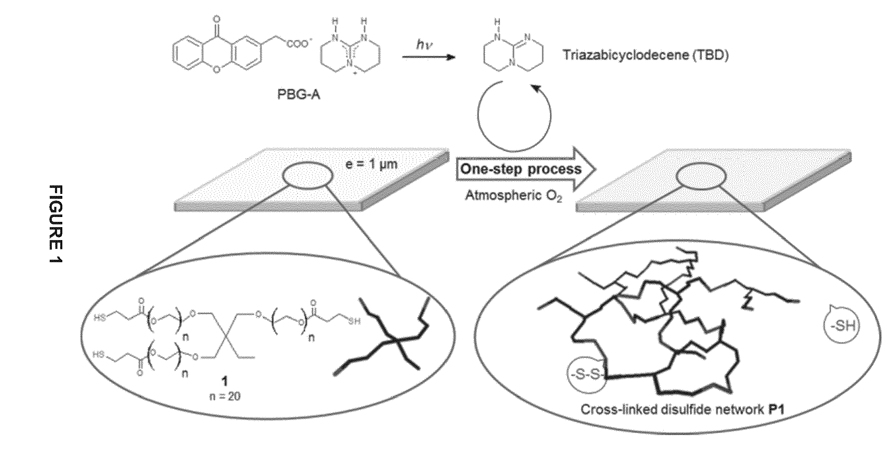

In one aspect, there is provided a fast and single-step UV light-mediated thiol oxidative photopolymerisation to synthesise disulphide polymer, preferably as a film, for example as illustrated in Figure 1.

The method is based on a photo-oxidative process in the presence of a photobase generator / polythiol derivatives monomers or oligomers preferably without preformed disulphide bridges.

The invention relates to a UV light-mediated process for synthesising poly(disulphide) films suitable for a large range of polythiols monomers or oligomers.

The invention allows extending the range of photocurable monomers or resins, including thiol derivatives. By this means, new poly(disulphide) photocurable coatings can be synthesised via an oxidative curing process.

Thus, a first object of the invention relates to a photobase catalysed oxidative poly(disulphide)s polymerisation method comprising the steps of:
a) preparing a composition comprising:
   - at least one photobase generator and
   - at least one monomer(s) comprising at least two thiol (SH) functional groups and / or at least one oligomer(s) having at least two thiol (SH) functional groups, and
b) exposing said at least one photobase generator to a UV-visible light irradiation in the presence of oxygen.

Thiols (SH) have a much lower acidity than alcohols (OH); the thiolate anion (S⁻) can be created at room temperature in the presence of a strong base. Thiolates can then be oxidised by atmospheric oxygen (O₂) into a thiyl radical (S•), which recombines to form a disulphide bond.

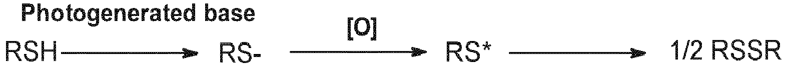

As used herein, the term "photobase generator" refers to a composition or compound capable of releasing under the action of UV-visible light irradiation a strong base, such as a strong Brönsted base. It can be, for example, a guanidine. As example of a photobase generator, we may mention triazabicyclodecene (TBD). The generated based is defined as the base catalyst of the photobase-catalysed oxidative polymerisation. Preferred photobase generators are TBD salt and methylxanthone acetic acid which generates under UV irradiation at 365 nm a TBD molecule via a photodecarboxylation mechanism (quantum efficiency: ϕ=ca. 0.64).

As used herein, the expressions "UV light mediated oxidative photopolymerisation"; "UV triggered oxidative polymerisation"; "oxidative photopolymerisation"; "photobase-catalysed oxidative polymerisation" or "oxidative coupling reaction controlled by UV-visible light"; can be used interchangeably.

The UV-visible radiation wave length (λ) may be comprised between 100 and 750 nm. Preferably λ may be in the UV range and can be comprised between 200 and 400 nm.

Polymers taken the conventional meaning of the term in the art, and refer to chemical compounds containing an indefinite number (more than one) of monomers.

Poly(disulphide)s or polydisulphides refer herein to any dynamic polymer that includes repeated reversible covalent S-S bonds.

The monomers or oligomers used in the context of the present invention can be any polythiols. Preferably the monomers or oligomers may be derived for example from polyester, polyurethane, poly (ethylene oxide); more preferably, without the initial presence of preformed disulphide bonds in the polythiol derivative monomers or oligomers.

Oligomers may be any chemical compounds containing more than one monomer and generally containing less than about 20 monomers. Oligomers are usually characterised by their molecular mass, which is higher than the mass of the dimer. The upper limit is of about 10,000 DA or less, preferably 6,000 or less (Synthesis and Characterization of Oligomers; C. V. Uglea, I. I. Negulesc; ISBN 0-8493-4954-0; 1991 CRC PRESS, INC **[23]**).

Non-limitative examples of monomers and oligomers suitable for the invention include:

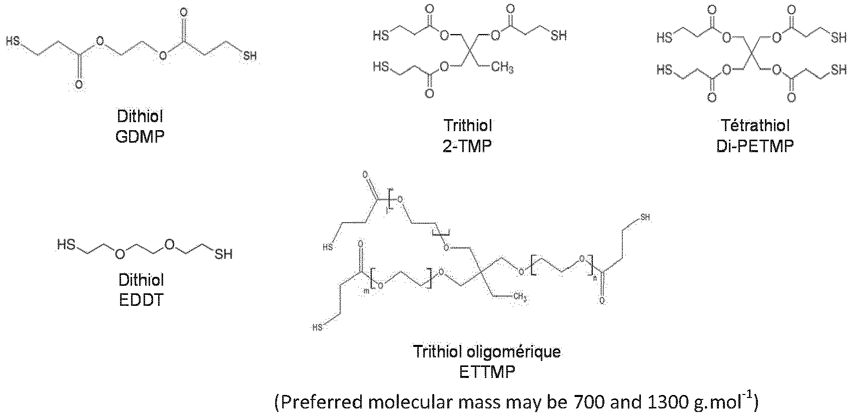

When exposed to a UV light irradiation, the photobase generator generates at least one base suitable to convert at least one thiol group to thiolates.

Oxygen (e.g., oxygen gas, O₂) may be present, in an amount sufficient to oxidise the at least one generated thiolate to form at least one thiyl radical (S•).

This single-step photobase-catalysed oxidative polymerisation preferably relies on air oxidation at ambient temperature, thus obviating the need for an external oxidant (oxidising agent). The absence of oxygen inhibition is another asset compared to a conventional radical photopolymerisation. Oxygen inhibition is known to be one of the major problems in light-induced radical photopolymerization. The inhibition mechanism involving atmospheric oxygen proceeds by quenching of photoinitiator triplet state, reaction with primary or propagating radical to form more stable peroxy radicals. The consequences are tacky surface or the difficulty to cure thin films (< 1 µm). By contrast, atmospheric oxygen becomes an integral reactant of thiol air oxidation mechanism. Therefore, all the problems related to oxygen inhibition can be obviated.

The air oxidation of thiol to disulphides is a well-established reaction (S. Oae and J. Doi, Organic Sulphur Chemistry, Taylor & Francis, 1991 **[24]**), which has been harnessed to poly(sulphide) synthesis with mixed success (Rosenthal-Kim *et al.* **[18]**).

Without being bound by any particular theory, it is believed that the release of the photobase causes the thiol groups to be converted to thiolates. The next step involves electron transfer with oxygen which results in the formation of thiyl radicals and subsequent dimerization to disulphides and step-growth polymerisation, as documented by many studies (S. Oae, Organic Sulphur Chemistry: Structure and Mechanism, CRC Press, 1991 **[25]**).

Advantageously, poly(disulphide)s may be crosslinked polymers, forming a three dimensional network of polymer chains.

Advantageously, photopolymerisation of poly(disulphide)s, preferably as poly(disulphide) film, is based on polythiol oxidation by atmospheric oxygen catalysed by a strong Brönsted base. The oxidative coupling reaction can be controlled by UV-visible light because the basic catalyst is produced as needed by photogenerating "on demand".

In addition, the UV light mediated oxidative photopolymerisation is energy-saving.

Advantageously, there is a significant reduction of the waste of the raw materials and of the final material.

UV light-mediated oxidative photopolymerisation enables the use of storable, ready-to-use, and cost-effective thiol formulations with no pot-life issue, the compositions generally having a long life time and can be prepared as a single component (1K) system. Advantageously, the 1K system may contain at least one polythiol prepolymer or monomer mixed with an appropriate photobase generator. When this system is cast and irradiated under ambient conditions, the thiols react with ambient oxygen to cure. In contrast, 2K system involves separate thiol(s) and oxidant(s) containers, which are mixed on site and at the proper ratio to cure the system. Consequently, a single, transparent, ready-to-use package containing the photoinitiating system and the thiol monomers or oligomers can be used. The poly(disulphide) synthetic process of the invention is particularly advantageous as the composition or formulation can be solvent-free (except for the deposition step).

The kinetics of polymerisation reaction of the UV light-mediated oxidative photopolymerisation is potentially rapid, in an order of a few minutes, from about 10 to 20 minutes and is energy efficient. In addition less expensive raw materials are required.

This innovative process is also in line with the new environmental regulations that limit energy costs, the use of toxic chemicals and solvent emission.

The poly(disulphide)s synthetic process of the invention is particularly advantageous as it provides the ability to easily rework areas before the initiation of the photopolymerisation, as there is no composition and formulation life time and no rheology change upon application.

In terms of process, a photoinduced reaction enables spatial and temporal control, exploited in photolithography applications and protein micro-patterning. Finally, these photopolymers open great prospect with respect to recycling because the starting thiol monomers or oligomers can be recovered under reducing environment.

This novel UV-curing process is a viable and complementary alternative to radical polymerisation, in which oxygen permeation (S. C. Ligon, B. Husár, H. Wutzel, R. Holman and R. Liska, Chemical Reviews, 2014, 114, 557-589 **[26]**) makes the surface polymerisation of submicrometric-thick films very tricky.

To the knowledge of the inventors, the process according to the invention is the first UV-mediated pathway to cross-linked poly(disulphide) based on thiol air oxidation. Significant advantages compared to previous methods include fast and complete thiol conversion, formation of chemically resistant film, and a one-step process starting from a simple and photolatent "thiol-PBG" bi-component formulation. There is no apparent limitation on substrate, and extension to a various range of thiol oligomers and monomers should allow to finely tune film properties.

In another aspect, there are provided poly(disulphide) films.

The process of the invention is particularly suitable to polymerise thin films. The efficient photobase-catalysed oxidative polymerisation of polyfunctional thiol (SH) monomers results in a range of poly(disulphide) network films. The process of the invention is suitable for single-step poly(disulphide) UV light-mediated thiol oxidative photo polymerisation to synthesise disulphide polymer as film.

Advantageously, the film may be obtained by spreading the composition as a layer with a thickness of less than 10 µm and preferably of less than 1µm before the exposure step b).

The process efficiency relies on different parameters in particular, the photogenerated TBD strong bases and thin film conditions (≤ 1 µm), promoting respectively thiolate formation and oxygen permeation. The novel oxidative photopolymerisation process according to the invention can create opportunities for the development of novel dynamic coatings, new negative photoresist micropattern generated by conventional photolithography techniques. Furthermore, proof of concept for recyclability was assessed by partial reductive cleavage of disulphide bridges to thiols to recover the initial oligomer.

Herein, the terms "film" or "coating" can be used interchangeably.

Photopolymerisation efficiency can be controlled by:
- i. a thin film morphology with a high surface/volume ratio favourable to atmospheric oxygen permeation; and
- ii. the release of strong base to mediate the deprotonation of the trithiol 1 (pKₐ = 9.87 in water at 25 °C) (C. D. Pritchard, T. M. O'Shea, D. J. Siegwart, E. Calo, D. G. Anderson, F. M. Reynolds, J. A. Thomas, J. R. Slotkin, E. J. Woodard and R. Langer, Biomaterials, 2011, 32, 587-597 **[27]**).

The resultant elastomer films possess low temperature flexibility, very good barrier properties, and resistance to weathering, oil, solvent. The barrier properties are related to disulphide-based polymer low permeability to organic solvent or fuels, and result directly from its specific sulphur backbone structure. This has prompted the use of poly(disulphide) for fuel storage systems, gas membranes, hoses and gaskets. Low permeability to water vapour has led to their general use as sealant for insulating glass.

Advantageously, poly(disulphide) films involve mixing a polythiol resin [e.g. ETTMP (Ethoxylated Trimethylolpropan-Tri (3-Mercaptopropionate), Bruno Bock] with a photo-base generator (for example, 1-6 % by weight relative to the monomer) capable of releasing under UV light a strong base of a guanidine type, such as triazabicyclodecene (TBD) (see photolysis mechanism). Advantageously, a solvent may be added to the formulation to adjust the viscosity as necessary. Advantageously, a film with a thickness of about one micrometer may be spread, on a substrate; a small thickness is preferred to ensure sufficient permeation of atmospheric oxygen which is the only oxidising agent.

Advantageously, the film may then be irradiated under UV light; preferably the UV light source may be a medium-pressure mercury vapour lamp. Advantageously, the polymerisation time may be between 10-20 minutes; however, tests under UV conveyor have shown that solid films could be obtained after about ten passes.

The final material is preferably in the form of a micrometric thick film of less than few µm, preferably less than 10 µm thickness and advantageously a thichness of 1 µm or less, with no inhibition phenomenon by oxygen. Preferably the film is a transparent photoreticulated elastomeric poly (disulphide)s film of thickness less than or equal to one micron.

Poly(disulphide) materials can advantageously be obtained in the form of film and not only as sealant (gasket).

Compared to other poly(disulphide)s, advantageously, the poly(disulphide) films obtained accordingly are transparent as there is no addition of an oxidising agent known to induce opacity.

Advantageously, the spatial control of the polymerisation under UV radiation allows to consider applications as negative photoresist composition for microelectronics. Spatial control allows polymerization to occur only in designated areas, i.e. exposed to the incident light.

Poly(disulphide) materials are insoluble and impermeable to oxygen and water. These properties combined with the excellent adhesion to metal due to the basicity of sulphur, allow considering applications as anticorrosion coatings.

The cleavage of the S-S bond is stimulated by redox pulse, including reversible thiol in the presence of various reducing agents (thiol, phosphine). This unique property for a crosslinked network allows considering a decrosslinking step at the end of life of the material, particularly useful for recycling.

Advantageously, films according to the present invention, can be employed to produce self-healing films under UV radiation when scratched, due to thiol-disulphide or disulphide-disulphide exchanges stimulated under UV light.

Advantageously, poly(disulphide) films according to the invention can be used for:
- satisfying specific needs or for preparing articles such as joints, gaskets, sealants, films, lenses including photocrosslinkable and potentially recyclable elastomer films;
- local reparation of joint for construction by irradiating only the damaged areas;
- polymer lenses due to their high refractive index associated to the presence of sulphur;
- films having barrier properties (low permeability to fuel, water, organic solvents);
- biostimulable films capable to interact with proteins under certain conditions. Proteins containing the amino acid cysteine units, either in the disulphide form or the free thiol form, can interact with the poly(disulphide) film via different mechanisms: disulphide-disulphide metathesis, thiol-disulphide exchange reactions, or thiol oxidation (with residual thiol groups of the film in case of partial conversion). These reactions result in film surface modification with the formation of new disulphide bonds or a rearrangement of the existing ones. Although these reactions can affect protein functionality and structure, they may promote the grafting of proteins onto the film surface.
- alternatively, poly(disulphide) -PEO films could be used for surface passivation to prevent cellular or proteins attachment;
- self-healing films.

Another object of the invention are UV-curable resin compositions to synthesise poly(disulphide)s, preferably as film, applicable to a large range of polythiol monomers or oligomers.

Such compositions comprise:
- at least one photobase generator and
- at least one monomer(s) comprising at least two thiol functional groups and / or at least one oligomer(s) having at least two thiol functional groups.

Advantageously, the composition may not comprise any additional oxidant, other than oxygen from air, in the formulation as oxygen from air is sufficient for the oxidation to occur. Preferably, the oxygen is atmospheric oxygen. Herein the expressions "oxidant", "oxidising agent" and "oxidative agent" are used interchangeably.

Advantageously, the composition may not comprise any solvent.

This invention is further illustrated by the following examples with regard to the annexed drawings.

### BRIEF DESCRIPTION OF THE DRAWINGS

Figure 1: represents a photocrosslinking polymerisation of trithiol oligomers.

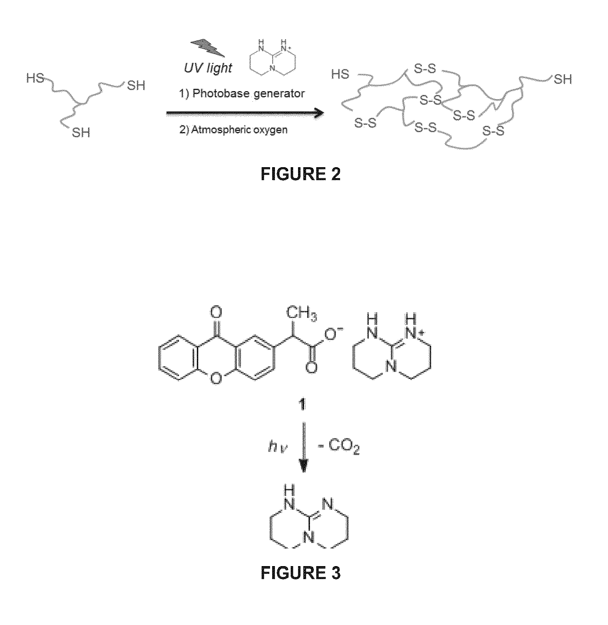

Figure 2: represents a photo-oxidative process in the presence of a photobase generator.
Figure 3: represents a photogeneration mechanism of the triazabicyclodecene (TBD) strong base.
Figure 4: represents Raman spectra of 1/PBG-A trithiol film after different UV exposure times: 0, 1, 3, 5, 7 and 15 min.
Figure 5: represents an XPS spectrum of 1/PBG-A trithiol film after 15 min UV exposure.
Figure 6: represents a thiol conversion-time plot obtained from RT-FTIR data during photopolymerisation of oligomer 1 during 900 s. (a) with PBG-A (4 wt. %) in air; (b) without PBG-A in air; (c) with PBG-A under nitrogen atmosphere; and (d) with PBG-B (4 wt. %) in air. The inset shows the temporal evolution IR S-H stretching mode feature at 2555 cm⁻¹.
Figure 7: represents a ¹H-NMR spectrum of the starting trithiol oligomer 1 and HR-MAS ¹H spectrum of polymer P1.
Figure 8: represents optical microscopy images of photolithography mask (a) and P1 photopatterned film (b). The strip width is 50 µm.
Figure 9: represents a ¹³C NMR spectra of oligomer 1, polymer P1, and the latter polymer after reduction, P1R.
Figure 10: represents a scheme of the mechanism of base-catalysed thiol oxidation with oxygen.
Figure 11: represents a scheme of the mechanism of photoinduced generation of N-isopropylmorpholine from PBG-B.

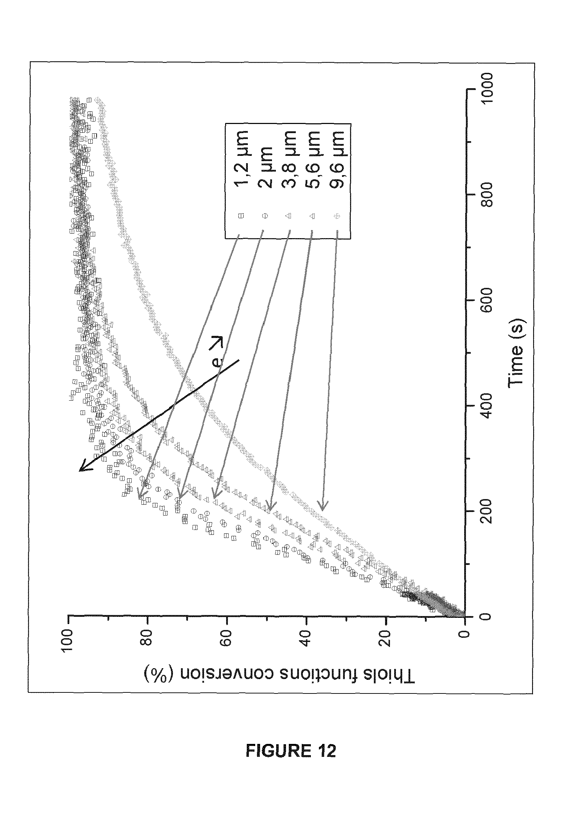

Figure 12: represents the effect of 1/PBG-A film thickness (e) on thiol oxidation kinetics. Irradiation conditions: Hg-Xe lamp (330-500 nm), Irradiance = 290 mW/cm².
Figure 13: represents a Raman spectra of thiol monomer 1 (a) and disulphide polymer P1 (b). Irradiation conditions: 10 passes under UV conveyor, total light dose = 1.35 J/cm², UV exposure = 2.3 s.
Figure 14: represents a ¹³C NMR spectra of oligomer 1 and polymer P1. Irradiation conditions: 10 passes under UV conveyor, total light dose = 1.35 J/cm², UV exposure = 2.3 s.
Figure 15: represents a TGA thermogram of P1. Irradiation conditions: 10 passes under UV conveyor, total light dose = 1.35 J/cm², UV exposure = 2.3 s.
Figure 16: represents a Differential Scanning Calorimetry (DSC) thermogram of P1.
Figure 17: represents images showing the reductive depolymerization of polymer P1.
Figure 18: represents a Raman spectra of monomer 3 (A) and polymer P3 (B) after UV irradiation
Figure 19: represents a ¹H NMR spectrum of 3 and ¹H MAS NMR spectrum of P3.
Figure 20: represents a ¹³C NMR spectrum of 3 and ¹³C CP-MAS NMR spectrum of P3.
Figure 21: represents a DSC thermogram of P3.
Figure 22: represents a TGA (thermal gravimetric analysis) thermogram of P3.
Figure 23: represents a ¹H NMR spectrum of 7 and ¹H MAS NMR spectrum of P7.
Figure 24: represents a ¹³C NMR spectrum of 7 and ¹³C CP-MAS NMR spectrum of P7.
Figure 25: represents a DSC thermogram of P7.

### EXAMPLES

### EXAMPLE 1: Influence of the structure of the polythiol prepolymer on the photopolymerisation

### Composition comprising: polythiol derivative and 4 wt. % PBG-A

Irradiation: UV exposure was carried out at through 15 successive passes under a UV conveyor (Qurtech) equipped with an H-bulb lamp (Fusion). The belt speed of the conveyor was set to 10 m/min. Under these conditions, the emitted light dose for each pass is 1.35 J/cm² (UVA [320-390 nm] : 0.46 J.cm⁻², UVB [280-320 nm] : 0.31 J.cm⁻², UVC [250-260 nm]: 0.08 J.cm⁻² and UVV [395-445 nm]: 0.50 J.cm⁻²) and corresponds to an exposure time of 0.23 s.

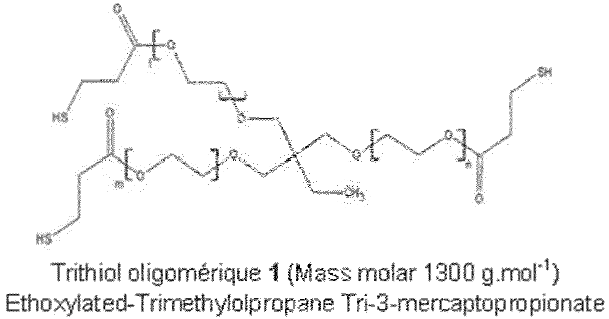

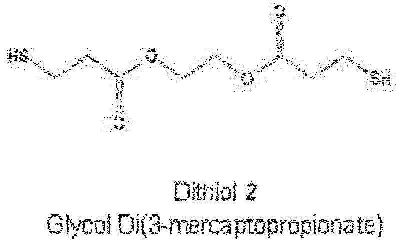

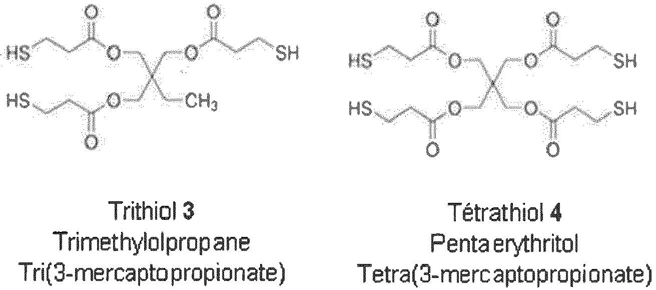

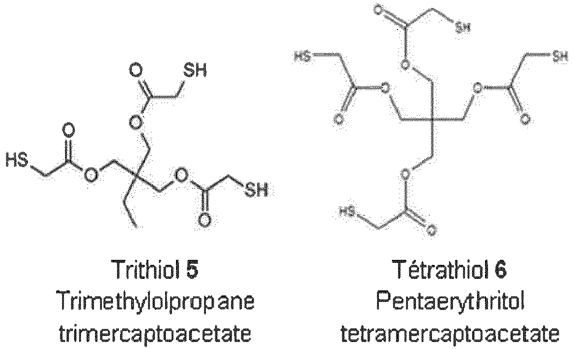

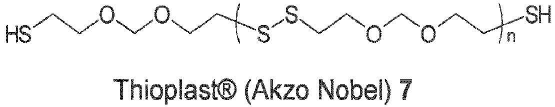

| Characteristics | Mass molar (g mol⁻¹) | Viscosity (Pa.s) | n | -SH content (%) | %mol crosslinker |
|---|---|---|---|---|---|
| 7 | < 1100 | 1,3 | <7 | 5-7 | 2 |

Results after photopolymerisation of layer thickness 1.5 ± 0.2 µm

### Results after 15 passes

| monomer(s) | T_{g} (°C) | Thiol Conversion (FTIR data) |
|---|---|---|
| 1 | -46 | 86 |
| 2 | - | < 5 |
| 5 | 6 | 93 |
| 3 | -13 | 71 |
| 6 | 43 | 95 |
| 4 | 19 | 67 |
| 4/2 (40/60 wt. %) | -24 | 57 |
| 7 | -45 | > 95 |

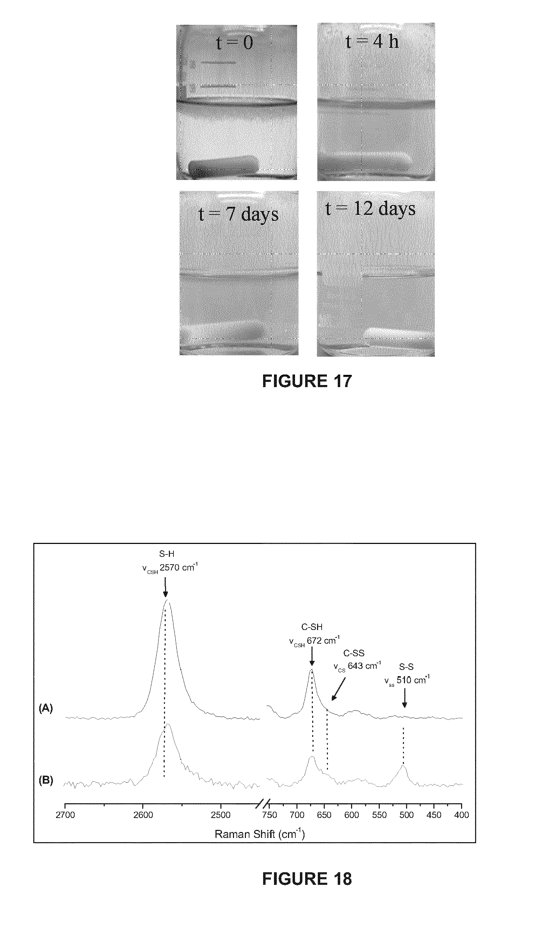

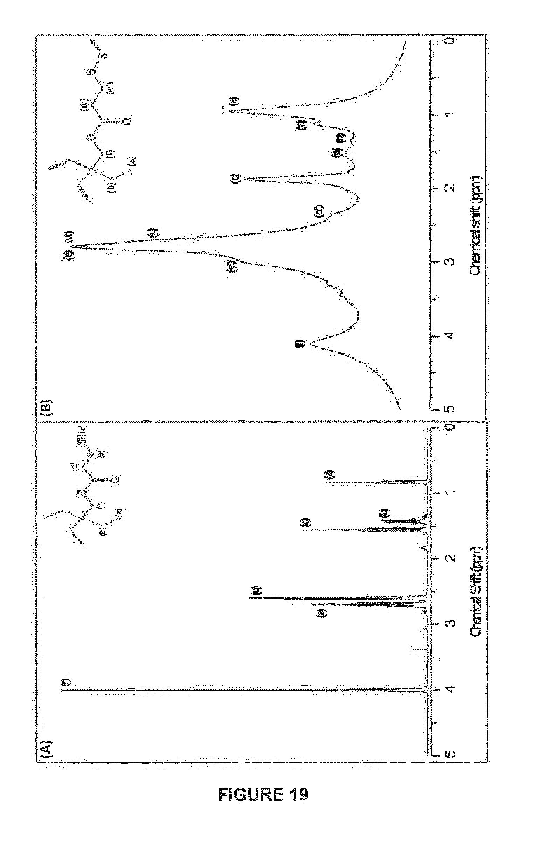

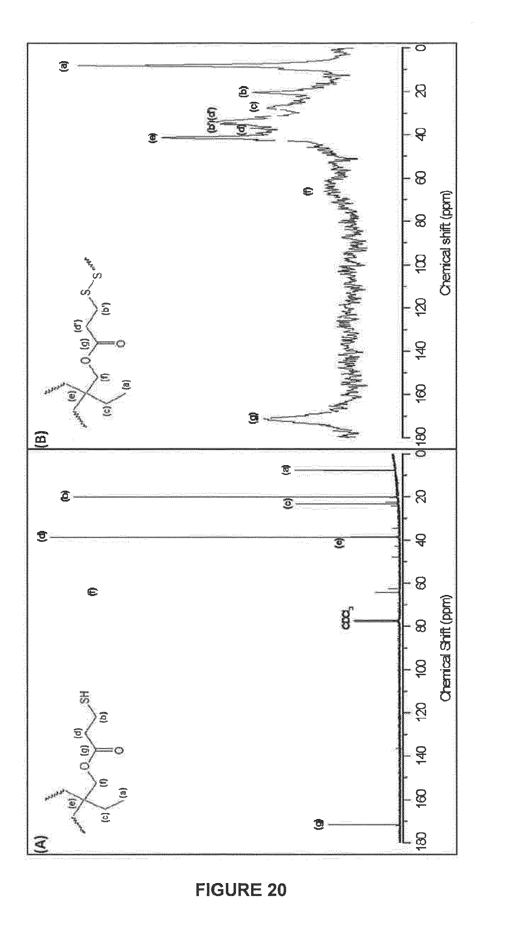

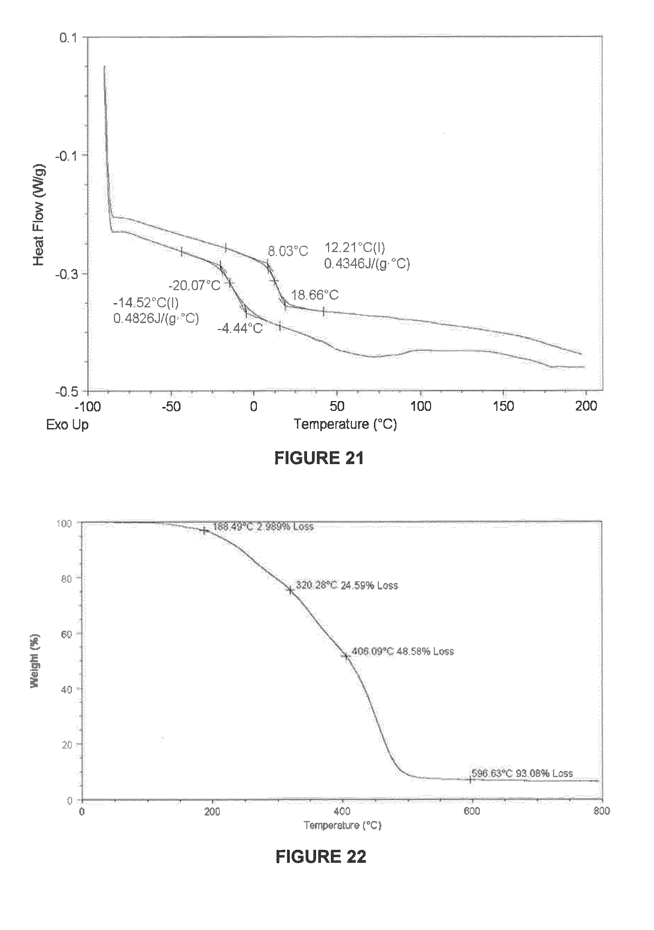

Results for monomer 3 are characterised by various method including Raman spectra (Figure 18), ¹H NMR (Figure 19), ¹³C NMR (Figure 20), DSC (Figure 21) and TGA (Figure 22).

### Results for oligomer 7

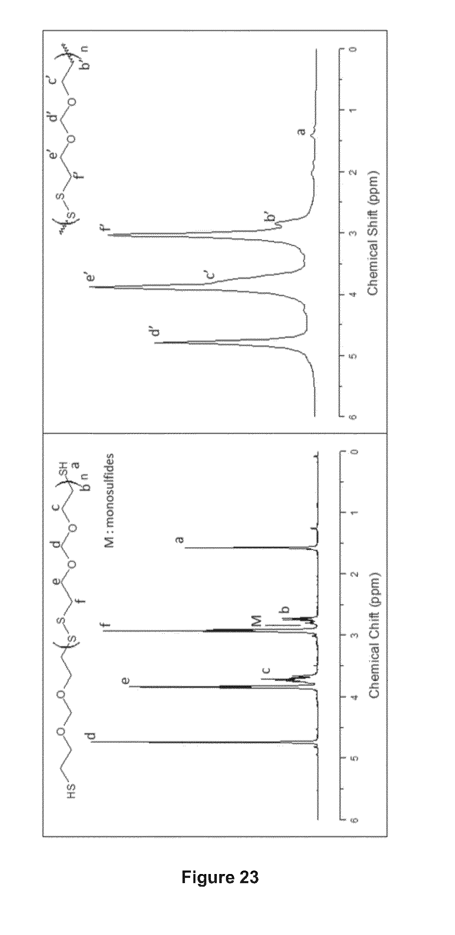

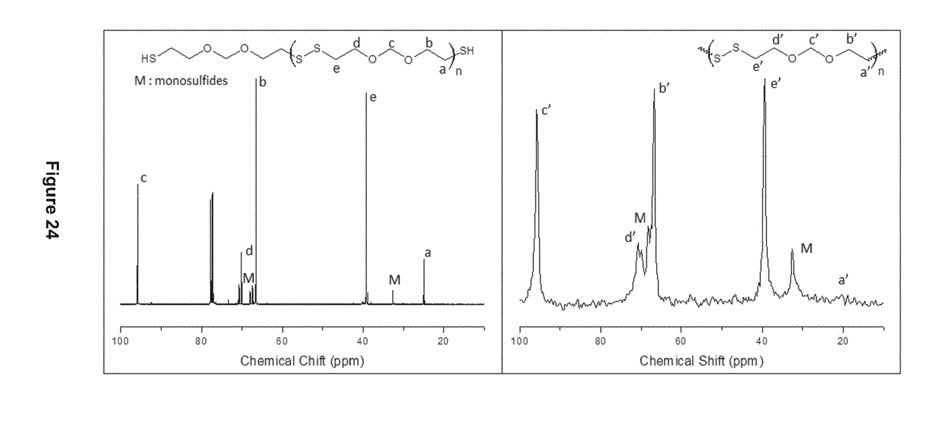

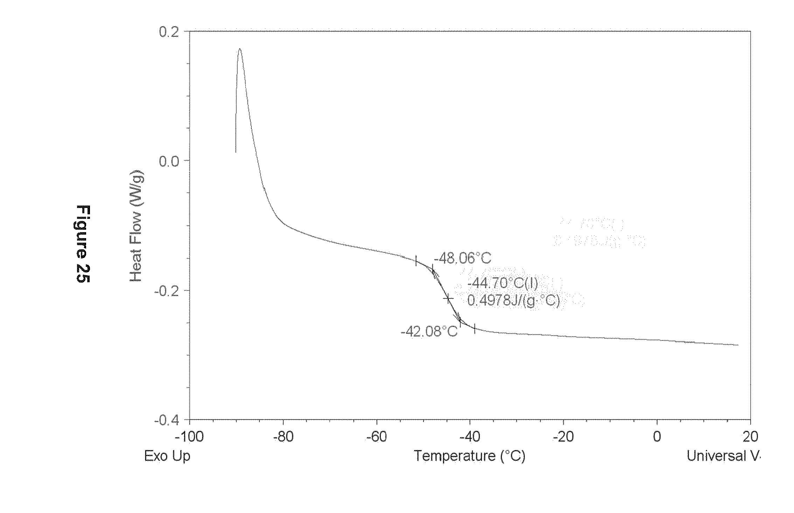

Results for oligomer 7 are characterised by ¹H NMR and ¹H MAS NMR (Figure 23), ¹³C NMR and ¹³C CP-MAS NMR (Figure 24) and DSC (Figure 25).

### EXAMPLE 2: Photoinduced Cross-linking of Dynamic Poly(disulphide) Films via Thiol Oxidative Coupling

A trifunctional poly(ethylene oxide) thiol oligomer (1300 g/mol, 1, Figure 1) is applied on a KBr substrate to form a 1 µm-thick liquid film. This latter includes 4 wt. % of xanthone acetic acid-based photobase generator (PBG) noted PBG-A, which is commercially available. Recently, Arimitsu et al. proved that this PBG was able to release a strong bicyclic guanidine (TBD) base via a photodecarboxylation reaction with high quantum yield (Figure 1) (K. Arimitsu and R. Endo, Chem. Mat., 2013, 25, 4461-4463 **[28]**). Subsequent UV irradiation of the photolatent bicomponent 1/PBG-A is performed in air and at ambient temperature with a filtered medium pressure Hg-Xe lamp (290 mW/cm², λ > 330 nm) for 15 min, resulting in a dry film fully insoluble in conventional organic solvents (acetone, THF, chloroform...). Poly (disulphide) network films were extensively characterised by different methods, including Raman and real-time Fourier transformed infrared (RT-FTIR) spectroscopy, X-ray photoelectron spectrometry (XPS), nuclear magnetic resonance (NMR), thermal gravimetric analysis (TGA) and differential scanning calorimetry (DSC), which shows that a quantitative photobase-catalysed air oxidation of thiol takes place, leading to the formation of a poly(disulphide) network film.

### Materials

Ethoxylated trimethylolpropane tri(3-mercaptopropionate) (1, ETTMP 130) was provided by Bruno Bock. 2-(9-Oxoxanthen-2-yl)propionic acid 1,5,7-triazabicyclo[4.4.0]dec-5-ene salt (PBG-A) and DL-dithiothreitol (DTT) were purchased from TCI. Irgacure 907 (PBG-B) is a gift from BASF Specialty Chemicals. Triethylamine and chloroform were purchased from Sigma-Aldrich. All reagents were used as received without further purification.

### Photopolymerisation of poly(disulphide) films

The formulation was prepared by adding 20 mg of PBG-A to a chloroform solution (V = 4 mL) containing 0.48 g of oligomer 1. The homogeneous and photolatent mixture was then deposited on a KBr or glass substrate using a bar coater to achieve a 1 µm thick film assessed by profilometry measurements. Two UV irradiation devices were implemented for oxidation photopolymerisation. First, ambient UV irradiation in air was performed during 900 s using a medium-pressure Hg-Xe lamp (Hamamatsu L8251, 200 W) coupled with a flexible light-guide. The emitted light was filtered (λ > 330 nm) to prevent self-dissociation of thiol functions, and directed perpendicular to the specimen placed 3 cm away. A total irradiance of 290 mW/cm² was measured at the surface of the film sample by conventional radiometric techniques. The irradiation device was also equipped with an elliptical reflector (365 nm) that efficiently reflects the UV light, and lets heat rays and visible light pass through, preventing any significant increase of temperature. Using this cold reflector cutting off heat, the local temperature during the process may be increased of ca. 3 °C. For experiments performed under nitrogen, the sample was performed in a controlled-environment chamber where temperature and atmosphere were finely adjusted. Light entry into the chamber was enabled by a KBr window transparent to UV light. This focalised UV lamp was used to conduct in situ RT-FTIR experiments. Alternatively, UV exposure was carried out at through ten successive passes under a UV conveyor (Qurtech) equipped with an H-bulb lamp (Fusion). The belt speed of the conveyor was set to 10 m/min. Under these conditions, the emitted light dose for each pass is 1.35 J/cm² (UVA [320-390 nm] : 0.46 J.cm⁻², UVB [280-320 nm] : 0.31 J.cm⁻², UVC [250-260 nm]: 0.08 J.cm⁻² and UVV [395-445 nm]: 0.50 J.cm⁻²) and corresponds to an exposure time of 0.23 s.

### Example 3: Photopatterning of poly(disulphide) film

The 1-PBG-A-CHCl₃ formulation of example 2 was deposited on glass substrate with a spin-coater to achieve an effective thickness of 1 µm. The substrate was then placed at 40 µm of a cross-patterned mask in a SUSS MicroTech mask aligner and irradiated for 15 min under a HBO Osram UV lamp (14 mW/cm²). After irradiation, the substrate was dipped several times into an acetone bath for 5 s to remove the unpolymerised parts.

### Reduction of poly(disulphide) P1 in presence of DTT

0.1 g of polymer P1 (0.12 mmol of disulphide bonds) was added as powder to 50 mL of chloroform under vigorous stirring. Subsequently, 0.15 g of DTT (0.96 mmol) and 9 mg of Et₃N (0.09 mmol) were added to the latter insoluble mixture. After 12 days of reaction, the solid aggregates have disappeared, and a turbid solution was formed. The resultant organic solution was washed with 50 mL of saturated NaCl aqueous solution to extract the watersoluble oxidised and reduced DTT species. The organic phase was evaporated and the sticky resin was analysed by NMR.

### Characterisation

Raman spectra were collected using an In via Raman reflex microscope from Renishaw. The excitation wavelength was provided by a Helium-Neon laser from Renishaw emitting 17 mW/cm² at 633 nm. 30 s of exposure and 10 spectra accumulation were needed to obtain a reasonable signal-to-noise ratio. The conversion rate of thiol functions was determined by integration of the Raman SH stretching band at 2570 cm⁻¹ before and after irradiation. ¹H NMR (400 MHz) and ¹³C NMR (100 MHz) spectra were recorded on a Bruker Advance 400 spectrometer equipped with Ultrashield magnet, and chemical shifts were referenced to the residual proton signal of the solvents CHCl₃ at 7.26 ppm. Real-time Fourier transform infrared (RT-FTIR) spectra were obtained with a Bruker Vertex 70 spectrophotometer equipped with a liquid nitrogen cooled mercury-cadmium-telluride (MCT) detector working in the rapid scan mode. The resolution of the spectra was 4 cm⁻¹ with an average of 4 scans/s. The conversion rate of thiol functions over time was determined by integration of the SH stretching band at 2555 cm⁻¹. X-ray photoelectron spectrometry (XPS) analysis was carried out using a Gammadata Scienta SES 2002 X-ray photoelectron spectrometer under ultra-high vacuum (P < 10⁻⁹ mbar). The monochromated Al Kα source was operated at a current of 30 mA and 14 kV, with a 90° nominal take-off angle (angle between the sample surface and photoemission direction). During acquisition, the pass energy was set to 200 eV for high-resolution spectra. Classical Scofield sensitivity factors were used for peak fitting procedures with CASAXPS software: S2p 1.68. All line shapes used in peak fitting procedures were a mix of 30% Gaussian and 70% Lorentzian shapes. Differential scanning calorimetry (DSC) was carried out on a TA Q2000 DSC using a heat-cool-heat thermal cycle. The first cycle started by heating the sample from -90 to 100 °C at 10 °C/min. The second cycle cooled the sample back to -90 °C. The third step heated the sample again from -90 to 100 °C at 10 °C/min. Thermal gravimetric analysis (TGA) was carried out with a TGA Q500 (TA Instruments) under nitrogen atmosphere (20 mL/min). 9 mg of poly(disulphide) film was placed in an open aluminium pan and heated from ambient conditions to 1000 °C at 10 °C/min⁻¹.

### Results and discussion

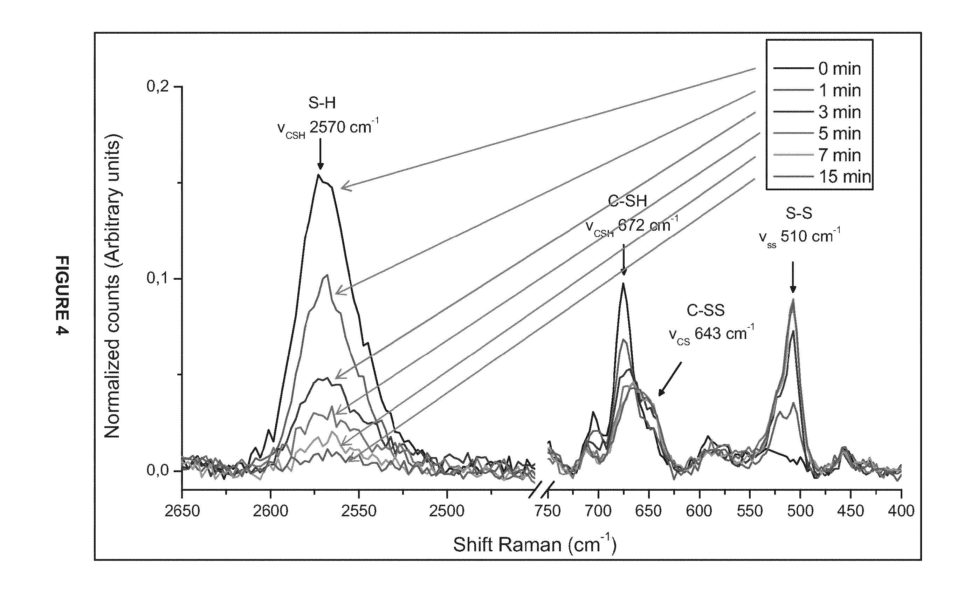

Proof for the formation of disulphide bonds is provided by analysing the film with Raman spectroscopy at different irradiation times. As shown in Figure 4, the spectrum of 1 (t = 0 min) shows significant differences compared to that of the as-irradiated polymer P1 (t = 15 min). The gradual decrease of the U_{S-H} and U_{C-SH} stretching mode features at 2570 cm⁻¹ and 672 cm⁻¹ respectively suggest a thiol consumption induced by UV exposure. After 15 min of irradiation, these two characteristic SH signals completely vanish below the noise level. Concomitantly with their decay, In the lower frequency range a large enhancement of the intensity ratio of the S-S stretching mode is noticed at 643 cm⁻¹ (U_{CSS}) and 510 cm⁻¹ (U_{SS}). On the basis of these two significant and simultaneous changes (no other modifications is noticeable), it is likely that air oxidation of thiols to disulphide bridges occurs, both selectively, i.e. without over-oxidation, and quantitatively (100 % conversion) despite the mobility restriction imposed by the network formation.

The photodissociation in air of monothiol compounds has been previously investigated at shorter wavelength (λ < 300 nm), yielding a range of higher oxidation states species such as sulfonic acid, sulphone, thiosulfinate or thiosulfonate (L. Li, J. Li, X. Du, A. Welle, M. Grunze, O. Trapp and P. A. Levkin, Angewandte Chemie International Edition, 2014, 53, 3835-3839 **[29]** ; E. Robert-Banchereau, S. Lacombe and J. Ollivier, Tetrahedron, 1997, 53, 2087-2102 **[30]**). The XPS surface analysis of the S2p peaks is instrumental in supporting the minor role played by the highly oxidised sulphur species, arising at a distinctive higher binding energy (168 eV) than thiols or disulphides (164-165 eV) (J. Amalric, P. H. Mutin, G. Guerrero, A. Ponche, A. Sotto and J.-P. Lavigne, Journal of Materials Chemistry, 2009, 19, 141-149 **[30]**).

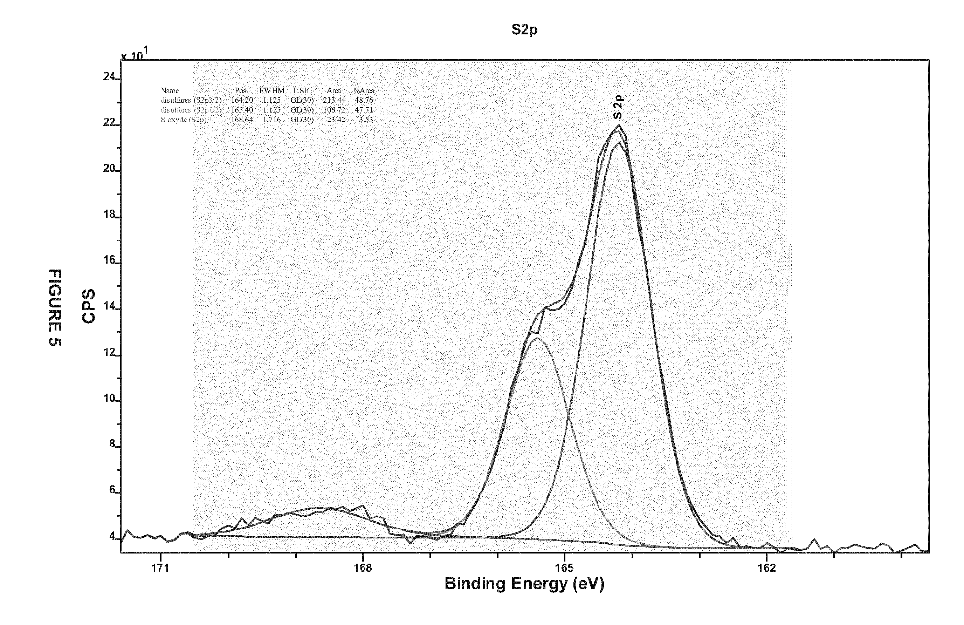

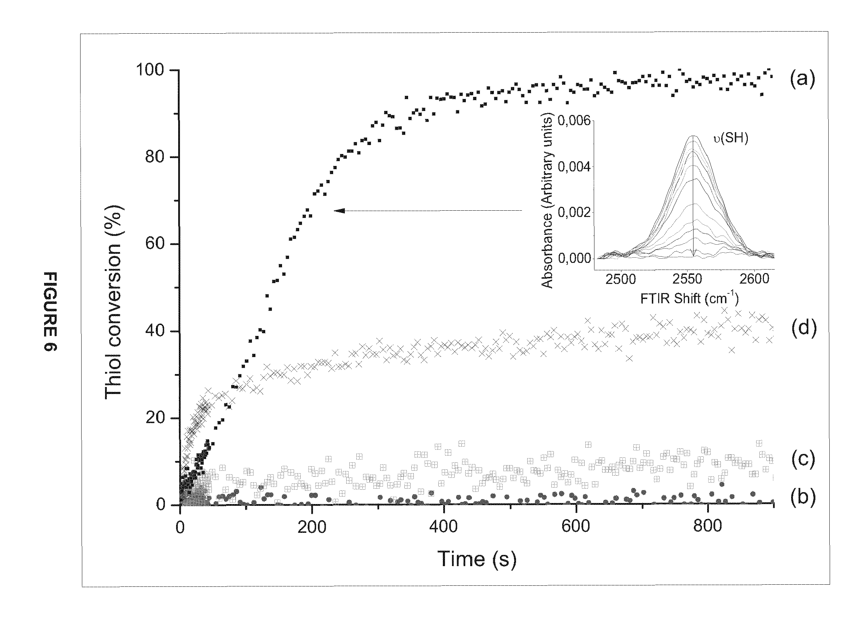

In addition, RT-FTIR spectroscopy was implemented to probe online the compositional change of the film throughout the irradiation (see supplementary information for experimental details). The decreasing IR S-H stretching mode feature at 2555 cm⁻¹, shown in the inset plot of Figure 5, gives essentially the same information as given by the Raman data in Figure 4, except that rapid scan acquisition provide in this case kinetic details. Thiol conversion-time plot in air (Figure. 5, trace a) shows a fast and complete consumption with 90 % conversion accomplished after only 5 min irradiation. In contrast, no conversion was obtained without UV exposure (even after 4 hours), demonstrating the photolatency of the reactive 1/PBG-A mixture. Additionally, no reaction takes place upon removing the PBG (Figure 6, trace b), which emphasizes the crucial role of thiolate in triggering the oxidation process. In order to shed further light into the photo-oxidation mechanistic scheme, a new experiment was conducted under nitrogen atmosphere (Figure 6, trace c). A strong inhibition is observed in this case, which argues for a prevalent role of atmospheric oxygen in the oxidation process.

The air oxidation of thiol to disulphides is a well-established reaction (S. Oae and J. Doi, Organic Sulphur Chemistry, Taylor & Francis, 1991 **[24]**), which has been harnessed to poly(sulphide) synthesis with mixed success (Rosenthal-Kim *et al.* **[18]**). Our hypothesis is that the release of the photobase causes the thiol groups to be converted to thiolates. The next step involves electron transfer with oxygen which results in the formation of thiyl radicals and subsequent dimerization to disulphides and step-growth polymerisation, as documented by many studies (S. Oae, Organic Sulphur Chemistry: Structure and Mechanism, CRC Press, 1991 **[25]**).

To complete this concise mechanistic description, photopolymerisation efficiency seems to be controlled by two features: i. a thin film morphology with a high surface/volume ratio favourable to atmospheric oxygen permeation; and ii. the release of strong base to mediate the deprotonation of the trithiol 1 (pKₐ = 9.87 in water at 25 °C) (C. D. Pritchard, T. M. O'Shea, D. J. Siegwart, E. Calo, D. G. Anderson, F. M. Reynolds, J. A. Thomas, J. R. Slotkin, E. J. Woodard and R. Langer, Biomaterials, 2011, 32, 587-597 **[27]**). The importance of this former issue was confirmed upon increasing film thickness (1 - 10 µm). Slower kinetics and limiting conversion are obtained, indicating an oxygen diffusion limitation effect (see Figure S1 of SI). Although this result stresses a limitation of the process, it positions this novel UV-curing process as a viable and complementary alternative to radical polymerisation, in which oxygen permeation (S. C. Ligon, B. Husár, H. Wutzel, R. Holman and R. Liska, Chemical Reviews, 2014, 114, 557-589 **[26]**) makes the surface polymerisation of submicrometric-thick films very tricky. Additionally, the importance of basicity is evidenced by substituting TBD (pKₐ = 14.5) (K. M. K. Yu, I. Curcic, J. Gabriel, H. Morganstewart and S. C. Tsang, The Journal of Physical Chemistry A, 2009, 114, 3863-3872 **[31]**).

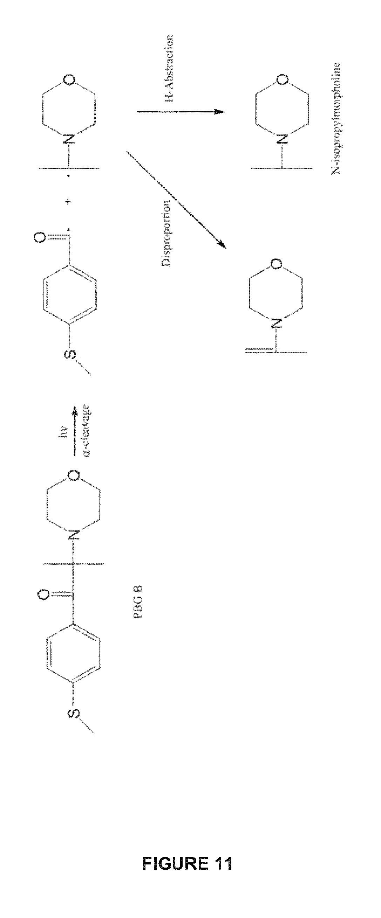

For a less basic N-alkyl morpholine tertiary amine (pKₐ = 9.3) photogenerated with a conventional α-aminoketone PBG noted PBG-B (see structure and photolysis mechanisms in Figure 11). Although quantum yields are different in both species, the released tertiary amine led to only 40 % thiol conversion after 15 min irradiation (Figure 6, trace d).

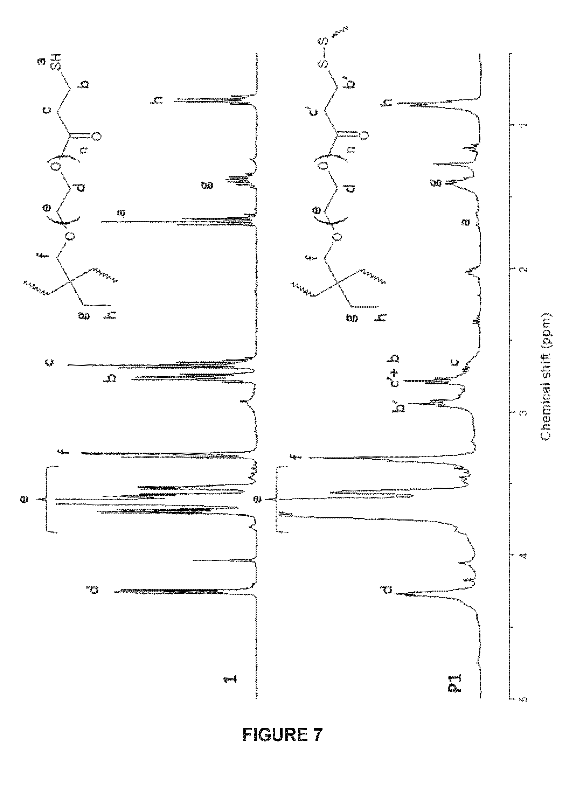

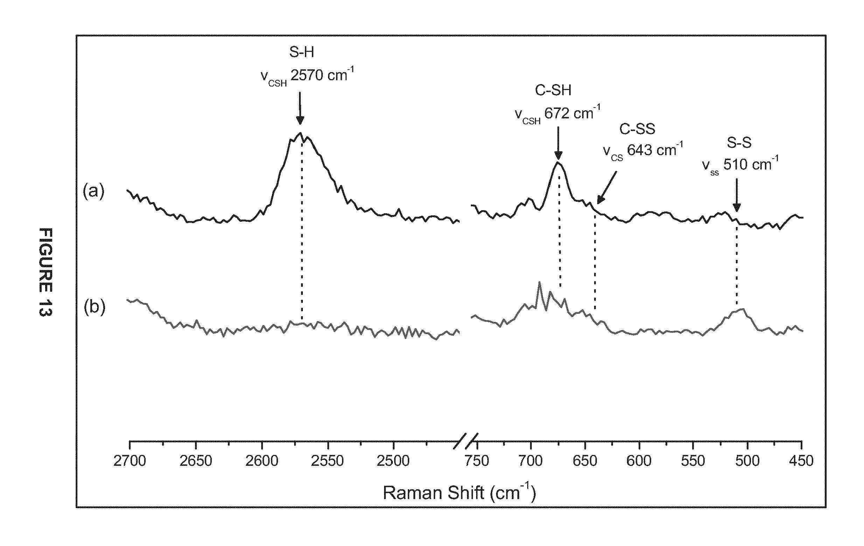

To illustrate the industrial viability of this process, cross-linked films were also produced under a UV-conveyor equipped with a medium-pressure lamp, which is the workhorse equipment for UV-curable coatings (W. Schnabel, Polymers and Light: Fundamentals and Technical Applications, Wiley, 2007 **[32]**). Dry films were obtained after 10 passes (4.95 W/cm² per pass) corresponding to an exposure time of 2.3 s. Raman and FTIR spectroscopy analyses were consistent with previous results, yielding 95 % conversion of thiol to disulphides (Figure 13). Despite a persistent insolubility typical of highly cross-linked polymers, the transparent rubbery film yielded a gel after several days in CDCl₃. This allowed their characterisation by High Resolution Magic Angle Spinning (HR-MAS) ¹H NMR technique. The spectra of the polymer products P1 as well as that of the oligomer 1 are displayed in Figure 7.

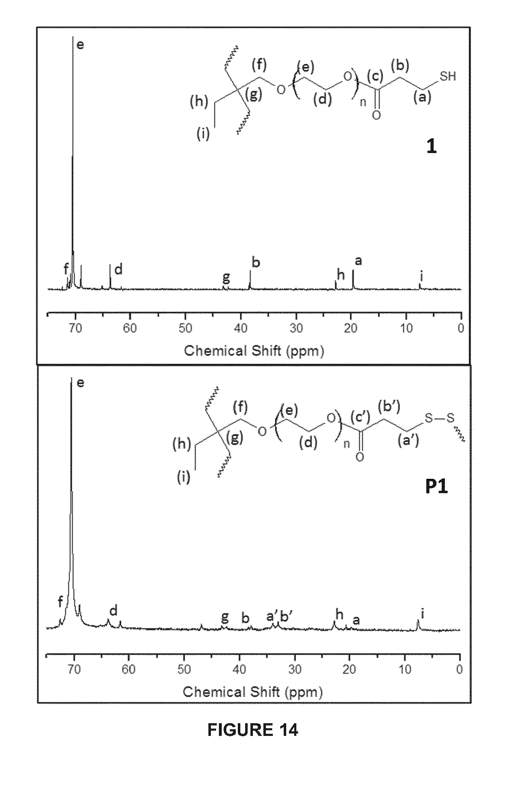

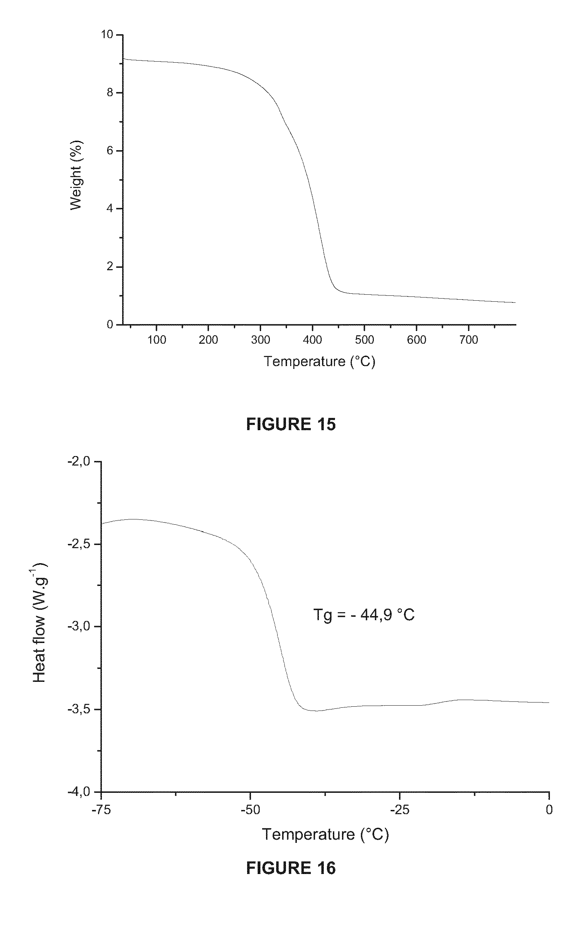

The feature at 1.68 ppm, straightforwardly attributed to thiol protons (Hₐ) in 1, is almost no detectable in P1, thereby confirming a high conversion > 95%. In addition, the resonance assigned to methylene protons adjacent to the thiol group at 2.76 ppm (H_{b}) is significantly shifted to 2.94 ppm (H_{b'}) in the polymer product. Together with the change of peak shape from quadruplet to triplet, this result provides clear evidences that disulphide bonds are created. Note that all these significant results were supported by complementary analysis using ¹³C NMR on oligomer 1 and ¹³C HR-MAS NMR on polymer P1 (the spectra are provided respectively in Figure 14. In addition, TGA (Figure 15) indicated that the polymer P1 was thermally stable up to 150 °C under nitrogen atmosphere. Finally, Differential Scanning Calorimetry (DSC) analysis (Figure 16) revealed an elastomeric behaviour with a glass transition temperature of -45 °C fully consistent with the literature data of poly(disulphide) (E.-K. Bang *et al* **[1]**).

One unique feature of UV-triggerable catalyst is to allow spatially-controlled polymerisation and surface modification, which are unattainable with a conventional latent catalyst. To demonstrate the spatial control ability of our photolatent thiol-based system, 1/PBG-A film was photopatterned using a commercial mask aligner using a high-pressure Hg lamp (14 mW/cm²). After a UV exposure of 15 min, the P1-based film was washed several times with acetone to remove the unreacted or soluble parts. Figure 6 shows two optical microscopy images of the developed film (right) and the original mask (left), indicative of the quality of the micro-scale photolithographic process. Despite the fact that hundreds of "photoresists" resins are commercially available, the functional diversity among these materials is severely limited. Thiol photooxidative polymerisation represents another chemical amplification reaction for negative tone resist, because a single photon can initiate a cascade of chemical reactions. Additionally, this UV-patterning process could serve for generating robust protein biochips applicable to a broad range of substrates, and based on a thiol/disulphide exchange protein immobilisation strategy (P. Jonkheijm, D. Weinrich, M. Köhn, H. Engelkamp, P. C. M. Christianen, J. Kuhlmann, J. C. Maan, D. Nüsse, H. Schroeder, R. Wacker, R. Breinbauer, C. M. Niemeyer and H. Waldmann, Angewandte Chemie International Edition, 2008, 47, 4421-4424 **[33]**).

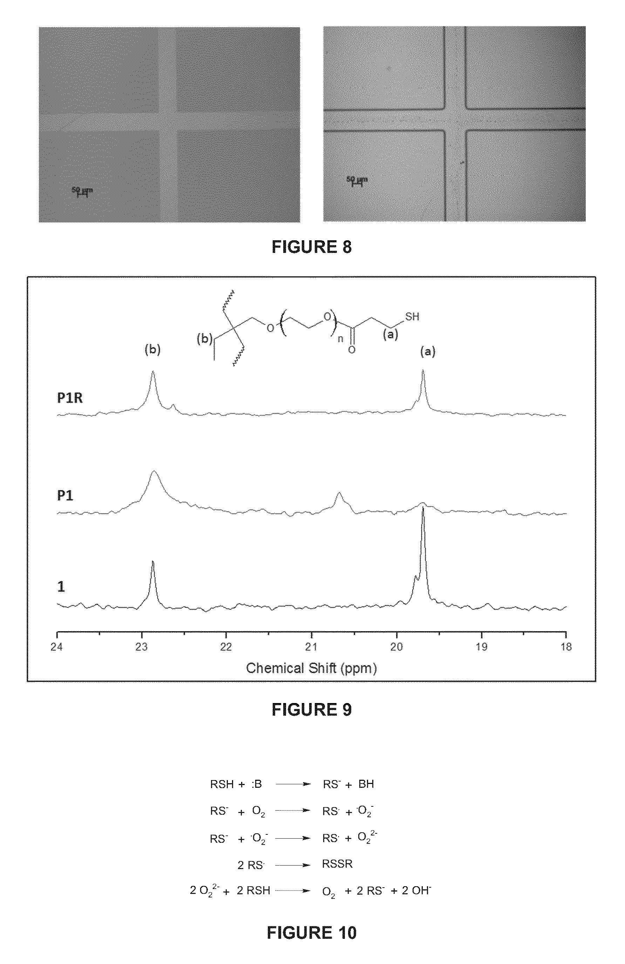

A second attractive application enabled by S-S bond reversibility is the reductive cleavage of the poly(disulphide) network as means to recycle the initial thiol oligomer. To this purpose, the powdered product P1 was stirred in a CHCl₃ solution containing 8 equivalents of dithiothreitol (DTT) and triethylamine. DDT, which forms a very stable six-membered ring in its oxidised state, is currently the most widely used reducing agent of disulphide-based proteins (S. Son, E. Shin and B.-S. Kim, Macromolecules, 2015 **[34]**). A gradual solubilisation was noted, and a slightly turbid solution was obtained after 12 days under stirring (see images in Figure 17). The reaction progress was assessed using ¹³C NMR. Figure 9 gives the ¹³C spectra of the starting oligomer 1 (trace a), and the polymer before (P1, trace b) and after reduction (P1R, trace c).

The extent of reduction is reflected by the integral ratios of the carbon signal of the methylene group (Cₐ) adjacent to the thiol group at 19 ppm to that of a reference resonance, such as the CH₂ (C_{b}) in alpha position of the methyl group (C_{c}) at 23 ppm. The initial ratio of 2.2 found in precursor 1 is reduced to less than 0.1 (5 % of thiol group remaining) after photopolymerisation (P1), then rises back to 0.8 (40 % of thiol group regenerated) at the end of the reduction process. These data demonstrate a partial regeneration of thiol group despite the poor solubility of the sulphur polymer, even though a complete reformation of 1 has not been successful.

### REFERENCES

1. E.-K. Bang, M. Lista, G. Sforazzini, N. Sakai and S. Matile, Chemical Science, 2012, 3, 1752-1763.
2. E. Q. Rosenthal, J. E. Puskas and C. Wesdemiotis, Biomacromolecules, 2011, 13, 154-164.
3. J.-M. Lehn, Progress in Polymer Science, 2005, 30, 814-831.
4. T. Maeda, H. Otsuka and A. Takahara, Progress in Polymer Science, 2009, 34, 581-604.
5. S. Billiet, K. De Bruycker, F. Driessen, H. Goossens, V. Van Speybroeck, J. M. Winne and F. E. Du Prez, Nat Chem, 2014, 6, 815-821.
6. B. D. Fairbanks, S. P. Singh, C. N. Bowman and K. S. Anseth, Macromolecules, 2011, 44, 2444-2450.
7. M. Burnworth, L. Tang, J. R. Kumpfer, A. J. Duncan, F. L. Beyer, G. L. Fiore, S. J. Rowan and C. Weder, Nature, 2011, 472, 334-337.
8. J. Canadell, H. Goossens and B. Klumperman, Macromolecules, 2011, 44, 2536-2541.
9. T. F. Scott, A. D. Schneider, W. D. Cook and C. N. Bowman, Science, 2005, 308, 1615-1617.
10. H. Otsuka, S. Nagano, Y. Kobashi, T. Maeda and A. Takahara, Chemical Communications, 2010, 46, 1150-1152.
11. S. Bauhuber, C. Hozsa, M. Breunig and A. Göpferich, Advanced Materials, 2009, 21, 3286-3306.
12. Caddy et al. (Eur. Polym. J., 39, 2003, 461-487
13. Teodorescu et al (Reactive Funct. Polym. 70, 2010, 419-425
14. Hirata et al. (J. Polym. Sci. A Polym. Chem., 4, 2010, 4385-4392
15. K. Kishore and K. Ganesh, in Polymer Synthesis/Polymer Engineering, Springer Berlin Heidelberg, 1995, vol. 121, pp. 81-121.
16. D. Vietti and M. Scherrer, in Kirk-Othmer Encyclopedia of Chemical Technology, John Wiley & Sons, Inc., 2000.
17. D. J. Phillips and M. I. Gibson, Biomacromolecules, 2012, 13, 3200-3208.
18. E. Q. Rosenthal-Kim and J. E. Puskas, Pure Appl. Chem., 2013, 84, 2121-2133.
19. Y. Lee, H. Koo, G.-w. Jin, H. Mo, M. Y. Cho, J.-Y. Park, J. S. Choi and J. S. Park, Biomacromolecules, 2005, 6, 24-26.
20. J. Kamada, K. Koynov, C. Corten, A. Juhari, J. A. Yoon, M. W. Urban, A. C. Balazs and K. Matyjaszewski, Macromolecules, 2010, 43, 4133-4139.
21. G. B. Lowe, International Journal of Adhesion and Adhesives, 1997, 17, 345-348.
22. W. Choi, F. Sanda, N. Kihara and T. Endo, Journal of Polymer Science Part A: Polymer Chemistry, 1998, 36, 79-84.
23. Synthesis and Characterization of Oligomers; C. V. Uglea, I. I. Negulesc; ISBN 0-8493-4954-0; 1991 CRC PRESS, INC
24. S. Oae and J. Doi, Organic Sulphur Chemistry, Taylor & Francis, 1991.
25. S. Oae, Organic Sulphur Chemistry: Structure and Mechanism, CRC Press, 1991.
26. S. C. Ligon, B. Husár, H. Wutzel, R. Holman and R. Liska, Chemical Reviews, 2014, 114, 557-589.
27. C. D. Pritchard, T. M. O'Shea, D. J. Siegwart, E. Calo, D. G. Anderson, F. M. Reynolds, J. A. Thomas, J. R. Slotkin, E. J. Woodard and R. Langer, Biomaterials, 2011, 32, 587-597.
28. K. Arimitsu and R. Endo, Chem. Mat., 2013, 25, 4461-4463.
29. L. Li, J. Li, X. Du, A. Welle, M. Grunze, O. Trapp and P. A. Levkin, Angewandte Chemie International Edition, 2014, 53, 3835-3839.
30. E. Robert-Banchereau, S. Lacombe and J. Ollivier, Tetrahedron, 1997, 53, 2087-2102.
31. J. Amalric, P. H. Mutin, G. Guerrero, A. Ponche, A. Sotto and J.-P. Lavigne, Journal of Materials Chemistry, 2009, 19, 141-149.
31. K. M. K. Yu, I. Curcic, J. Gabriel, H. Morganstewart and S. C. Tsang, The Journal of Physical Chemistry A, 2009, 114, 3863-3872.
32. W. Schnabel, Polymers and Light: Fundamentals and Technical Applications, Wiley, 2007.
33. P. Jonkheijm, D. Weinrich, M. Köhn, H. Engelkamp, P. C. M. Christianen, J. Kuhlmann, J. C. Maan, D. Nüsse, H. Schroeder, R. Wacker, R. Breinbauer, C. M. Niemeyer and H. Waldmann, Angewandte Chemie International Edition, 2008, 47, 4421-4424.
34. S. Son, E. Shin and B.-S. Kim, Macromolecules, 2015

## Claims

1. Photobased catalysed oxidative poly(disulphide)s polymerisation method comprising the steps of:
a) preparing a composition comprising:
• at least one photobase generator and
• at least one monomer(s) comprising at least two thiol functional groups and / or at least one oligomer(s) having at least two thiol functional groups, and
b) exposing said at least one photobase generator to a UV-visible light irradiation in the presence of oxygen.

2. Polymerisation method of claim 1 wherein said at least one photobase generator is selected from: 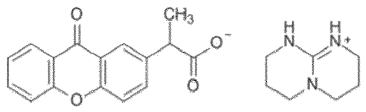 and

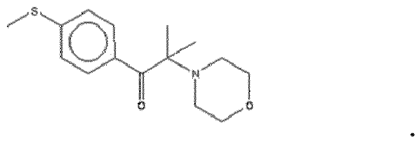

3. Polymerisation method according to claim 1 or 2, wherein said monomer (s) and / or oligomer (s) is (are) selected from:

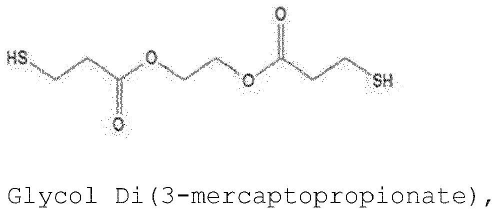

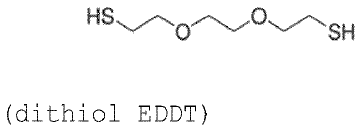

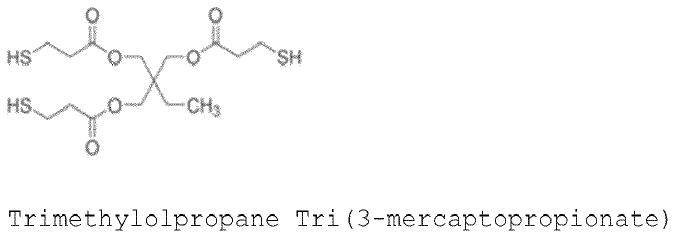

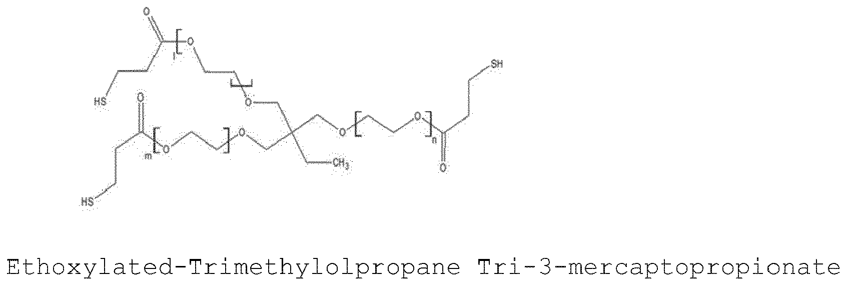

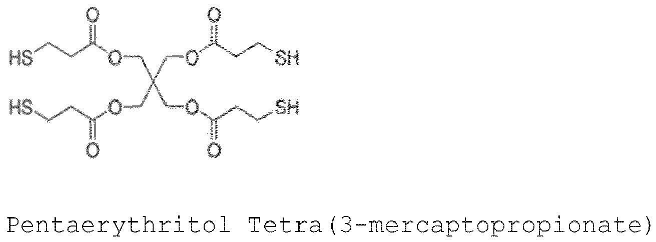

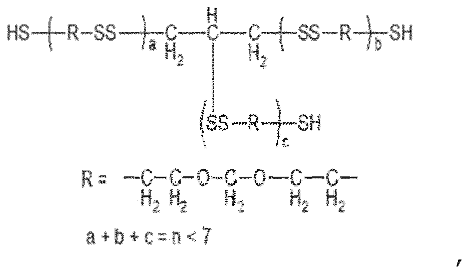

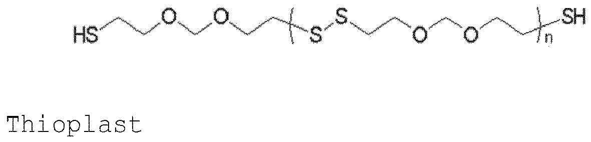

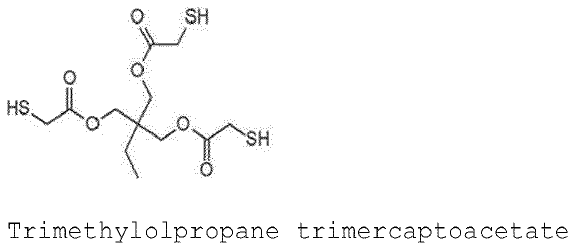

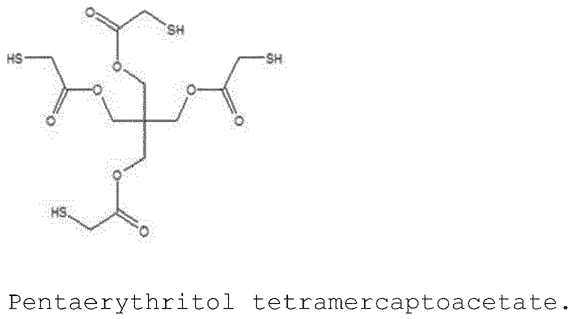

4. Polymerisation method according to any one of claims 1 to 3 wherein said composition is applied as a layer before said exposure step b).

5. Polymerisation method according to claim 4, wherein said layer has a thickness that is less than or equal to 10 micrometers.

6. Polymerisation method according to any one of the preceding claims, wherein the composition does not comprise any solvent.

7. Polymerisation method according to any one of the preceding claims, wherein the composition does not comprise any additional oxidising agent.

8. Composition comprising:
• at least one photobase generator and
• at least one monomer(s) comprising at least two thiol functional groups and / or at least one oligomer(s) having at least two thiol functional groups.

9. Composition according to claim 8 wherein said monomers and / or oligomers are defined in claim 3.

10. Composition according to any one of claims 8 or 9, wherein said composition does not comprise additional oxidising agent.

11. Composition according to any one of claims 8 to 10, comprising from 1 to 6 % by total weight of the composition of photobase generator.

12. A transparent photoreticulated elastomeric poly (disulphide)s film of thickness less than or equal to one micron, obtained or obtainable by a method according to any one of claims 1 to 5.

13. Use of a poly(disulphide)s obtained or obtainable by a method according to any one of claims 1 to 7, as a coating, in particular anti-corrosion and / or adhesive.

14. Use of a composition according to any one of claims 8 to 11 for preparing a coating, in particular anti-corrosion and / or adhesive.

15. Use of a composition according to any one of claims 8 to 11 for preparing a mask in photolithographic applications.

16. Use of a transparent photoreticulated elastomeric poly (disulphide)s film according to claim 12:
- for the local reparation of joint for construction;
- for the manufacture of thin plastic lens;
- as film having barrier properties;
- as biostimulable film,
- as poly(disulphide) -PEO film for surface passivation to prevent cellular or proteins attachment; and
- as self-healing film.
